# FASCICULE DE BREVET EUROPEEN

(11) **EP 1 349 400 B1**
(45) Date de publication et mention de la délivrance du brevet: **08.06.2005**
(21) Numéro de dépôt: 03290638.0
(22) Date de dépôt: 14.03.2003
(51) Int. Cl.: H04Q 3/00

(54) **Fourniture de services pour terminaux privés distants**
Bereitstellung von Diensten entfernten Terminal mit einem entfernten Endgerät
Service provision for remote private terminals

(30) Priorité: 25.03.2002 FR 0203692
(43) Date de publication de la demande: 01.10.2003
(73) Titulaire: ALCATEL, 75008 Paris (FR)
(72) Inventeur: Pinault, Francis, 92270 Bois-Colombes (FR)
(74) Mandataire: Sciaux, Edmond

(56) Documents cités:
- US-A- 4 899 373

## Description

L'invention concerne le domaine des communications entre terminaux au sein de réseaux différents, et plus particulièrement celui de la fourniture de services privés à des terminaux déconnectés de leur réseau privé.

De nombreux réseaux, généralement privés, offrent à leurs utilisateurs, lorsque leurs terminaux y sont raccordés, la possibilité de bénéficier de services spécifiques, tels que l'accès à des bases de données ou messageries privées, ou l'affichage de leur nom sur l'écran du terminal de l'utilisateur avec lequel ils communiquent. Ayant constaté que ces utilisateurs étaient fréquemment déconnectés physiquement de leur réseau privé, par exemple du fait qu'ils travaillent chez des clients ou à domicile, les concepteurs de réseaux ont développé de nouvelles architectures de réseaux privés permettant d'établir des liaisons à partir de certains réseaux publics, tels que PSTN et PLMN. Cela sous entend que les terminaux sont adaptés à ces réseaux publics. Un exemple est décrit dans US 4 899 373.

Or, du fait de la complexité de ces nouvelles architectures, et des problèmes de synchronisation entre réseaux publics et privés, les utilisateurs ne peuvent pas bénéficier de l'intégralité des services offerts par leurs réseaux privés, lorsqu'ils y sont raccordés via le réseau public. C'est notamment le cas de la fonction d'affichage automatique du nom de l'appelant et/ou de l'appelé.

Pour tenter de remédier à cet inconvénient, le protocole CLIP (« Calling Line Identification Présentation ») a été récemment proposé. Mais, si les messages CLIP réservent un champ pour le nom de l'appelant, celui-ci n'est jamais communiqué par le réseau public au réseau privé.

Par conséquent, aucun procédé n'apporte une entière satisfaction en matière de fourniture de services privés à des terminaux déconnectés de leur réseau privé.

L'invention a donc pour but de remédier à cet inconvénient.

Elle propose à cet effet un procédé de fourniture de services à des terminaux privés quel que soit le réseau auquel ils sont raccordés et quelle que soit leur localisation par rapport au réseau privé auquel ils appartiennent (bien entendu, sous réserve d'accord entre les propriétaires desdits réseaux).

Plus précisément, le procédé concerne les réseaux privés qui comportent une base de données privée contenant les identifiants primaires de ses terminaux privés associés à des premières données représentatives des services auxquels ils ont accès au sein du réseau privé, et les réseaux publics qui comportent une plate-forme « intelligente », de commutation et routage, et sont raccordés auxdits réseaux privés.

Ce procédé se caractérise par le fait qu'il comprend :
* une première étape au cours de laquelle on procède au stockage, à une adresse accessible à la plate-forme intelligente, de secondes données représentatives d'une partie au moins de la base de données privée, et, à une adresse du réseau public, des troisièmes données représentatives de l'identifiant primaire de chaque terminal privé, du réseau privé associé et de la plate-forme intelligente ayant accès aux secondes données dudit réseau privé, et
* une seconde étape au cours de laquelle, en cas d'émission par l'un des terminaux privés d'une requête de service sur le réseau public, on procède à l'extraction des troisièmes données associées à l'identifiant primaire du terminal privé requérant, puis on compare les données de la requête aux secondes données désignées par les troisièmes données extraites, de manière à autoriser ou non la plate-forme, désignée par les troisièmes données extraites, à mettre en oeuvre le service requis.

On entend ici par « extraire », le fait de lire des données, sans les retirer, puis éventuellement de les conserver, par exemple dans une mémoire.

Le procédé selon l'invention pourra comporter de nombreuses caractéristiques complémentaires qui pourront être prises séparément et/ou en combinaison, et en particulier :
- des secondes données stockées dans au moins une base de données auxiliaire ;
- des troisièmes données stockées dans une première table de correspondance sous forme d'un identifiant primaire de terminal privé, d'un identifiant secondaire associé au réseau privé auquel appartient le terminal privé et d'un identifiant tertiaire associé à la plate-forme intelligente ayant accès aux secondes données du réseau privé ;
- le stockage à une adresse accessible à la plate-forme intelligente, de préférence lors de la première étape, d'une seconde table de liens entre réseaux privés autorisés à communiquer entre eux ;
- des requêtes comprenant, de préférence, au moins l'identifiant primaire du terminal privé requérant et des quatrièmes données représentatives de l'action requise. Cette action est préférentiellement une demande de service, comme par exemple l'affichage du nom de l'appelant et/ou de l'appelé, ou l'autorisation d'accès à une base de données interne, ou une demande de liaison à un autre terminal privé. Certaines requêtes peuvent également comprendre des cinquièmes données représentatives d'une autorisation d'accès à au moins un service au sein de leur réseau. Ainsi, même si la base auxiliaire ne comporte pas d'autorisation d'accès au service demandé par l'utilisateur stockée en correspondance de son identifiant, celui-ci pourra bénéficier, au moins ponctuellement, du service puisqu'il a communiqué le code correspondant ;
- certaines secondes données pouvant être représentatives de services subdivisés en niveaux de service. Par exemple, un premier niveau ne permet l'affichage de nom qu'entre utilisateurs d'un même réseau privé, tandis qu'un second niveau permet l'affichage de nom entre utilisateurs appartenant à des réseaux différents ayant passé un accord, et un troisième niveau permet l'affichage du nom de l'appelant sur l'écran d'un utilisateur appelé raccordé à un réseau n'ayant pas passé d'accord avec le réseau privé ;
- une étape auxiliaire dans laquelle on procède au stockage, à une adresse accessible à la plate-forme intelligente, d'une troisième table de relations externes comportant des identifiants primaires de terminaux privés en correspondance de listes d'identifiants quaternaires représentatifs de terminaux avec lesquels ils sont autorisés à établir des liaisons. Cela permet notamment d'établir des liaisons avec certains terminaux appartenant à des réseaux, publics ou privés, n'ayant pas passé d'accord avec le réseau privé de l'utilisateur requérant. De telles listes peuvent être communiquées directement par les utilisateurs à la plate-forme intelligente lorsqu'ils ont reçu l'autorisation du superviseur de leur réseau privé ;
- une autre étape auxiliaire dans laquelle on met à jour le contenu de la base auxiliaire et/ou de la première table de correspondance et/ou de la seconde table de liens et/ou de la troisième table de relations externes. Ces mises à jour, ou l'une au moins d'entre elles, peuvent être effectuées périodiquement ou sur requête.

L'invention porte également sur un dispositif de fourniture de services à des terminaux privés appartenant un ou plusieurs réseaux privés comportant chacun une base de données privée contenant des identifiants primaires des terminaux privés associés à des premières données représentatives de services auxquels ont accès les terminaux privés au sein du réseau privé correspondant, et qui sont susceptibles d'être connectés à un réseau public comportant une plate-forme intelligente, de commutation et routage, et raccordé à l'un desdits réseaux privés.

Plus précisément, le dispositif se caractérise par le fait qu'il comporte :
* des premiers moyens de stockage accessibles à la plate-forme intelligente et contenant des secondes données représentatives d'une partie au moins de la base de données privée,
* des seconds moyens de stockage accessibles sur le réseau public et contenant des troisièmes données représentatives de l'identifiant primaire de chaque terminal privé, du réseau privé associé et de la plate-forme intelligente ayant accès aux secondes données de ce réseau privé, et
* des moyens de gestion capables, en cas d'émission par l'un des terminaux privés d'une requête de service sur le réseau public, d'extraire des seconds moyens de stockage les troisièmes données associées à l'identifiant primaire du terminal privé requérant, puis à comparer les données de la requête aux secondes données désignées par les troisièmes données extraites, de manière à autoriser ou non la plate-forme (INP), désignée par les troisièmes données extraites, à mettre en oeuvre le service requis.

Le dispositif selon l'invention pourra comporter de nombreuses caractéristiques complémentaires qui pourront être prises séparément et/ou en combinaison, et en particulier :
- au moins une base de données auxiliaire dans laquelle sont stockées les secondes données ;
- des seconds moyens de stockage comprenant une première table de correspondance comportant les troisièmes données sous forme d'un identifiant primaire de terminal privé, d'un identifiant secondaire associé au réseau privé auquel appartient le terminal privé et d'un identifiant tertiaire associé à la plate-forme intelligente ayant accès aux secondes données du réseau privé ;
- des troisièmes moyens de stockage accessibles à la plate-forme intelligente et comportant une seconde table de liens entre réseaux privés autorisés à communiquer entre eux ;
- des requêtes comprenant au moins l'identifiant primaire du terminal privé requérant et des quatrièmes données représentatives de l'action requise (de préférence une demande de service ou une demande de liaison à un autre terminal privé). Ces requêtes peuvent également comprendre des cinquièmes données représentatives d'une autorisation d'accès à au moins un service au sein d'un réseau ;
- des secondes données parmi lesquelles certaines peuvent être représentatives de services subdivisés en niveaux de service ;
- des quatrièmes moyens de stockage accessibles à la plate-forme intelligente et comportant une troisième table de relations externes comprenant des identifiants primaires de terminaux privés en correspondance de listes d'identifiants quaternaires représentatifs de terminaux avec lesquels ils sont autorisés à établir des liaisons ;
- des moyens de mise à jour capables de mettre à jour, périodiquement ou sur requête, le contenu de la base auxiliaire et/ou de la première table de correspondance et/ou de la seconde table de liens et/ou de la troisième table de relations externes. De tels moyens de mise à jour sont préférentiellement implantés dans un serveur de liaison dépendant de la plate-forme intelligente ;
- des moyens de gestion dont une partie au moins est préférentiellement implantée dans un serveur de gestion du réseau public et pouvant comporter les seconds moyens de stockage comprenant la première table de correspondance.

L'invention peut être mise en oeuvre dans tout type de réseau de communications, privé ou public, et en particulier dans les réseaux Internet, PLMN et PSTN pour, par exemple, des réseaux publics, ou, par exemple, TETRA et RUBIS pour des réseaux privés.

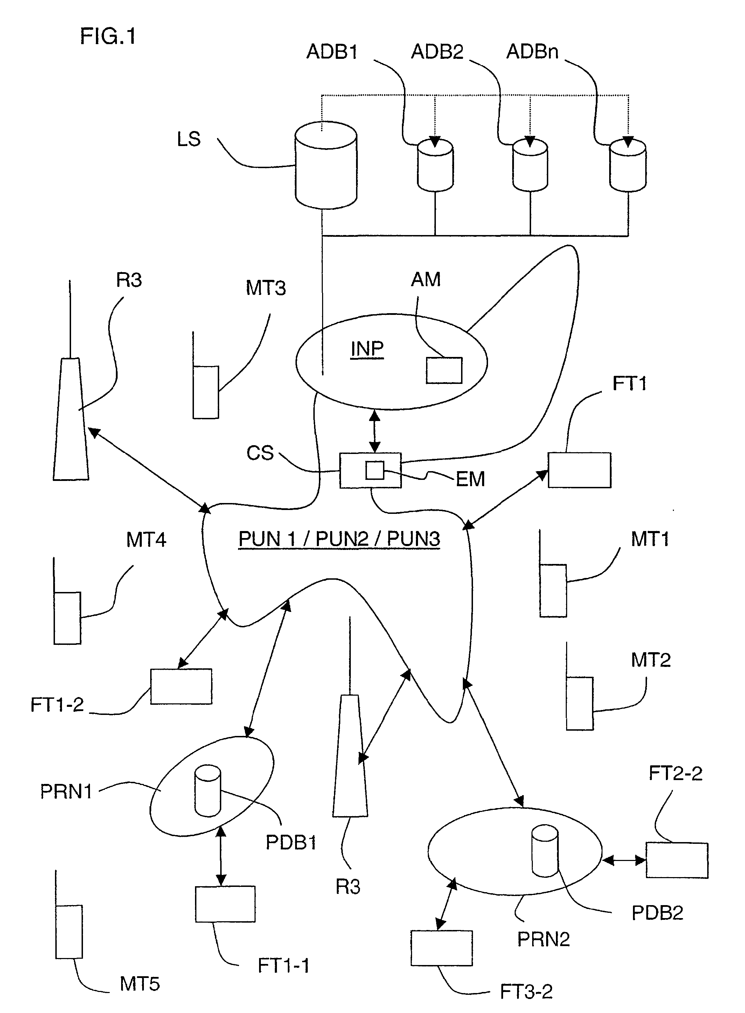

D'autres caractéristiques et avantages de l'invention apparaîtront à l'examen de la description détaillée ci-après, et de l'unique dessin annexé en figure 1, qui illustre de façon schématique une installation de communications multi-réseaux, équipée d'un dispositif selon l'invention. Ce dessin est, pour l'essentiel, de caractère certain. En conséquence, il pourra non seulement servir à compléter l'invention, mais aussi contribuer à sa définition, le cas échéant.

L'installation de communications illustrée sur la figure 1 comporte tout d'abord plusieurs réseaux publics PUN1, PUN2 et PUN3 raccordés entre eux via une plate-forme intelligente INP de commutation et routage, appartenant de préférence à l'un d'entre eux. Cette plateforme peut-être par exemple constituée de serveurs connectés sous IP assurant des fonctions d'analyse d'acheminement et des fonctions de commandes de routage et de taxation . Le nombre de réseaux publics n'est pas limité à trois. Il pourra en effet prendre n'importe quelle valeur entière supérieure ou égale à 1. Ces réseaux publics PUN1, PUN2, PUN3 sont par exemple Internet, PSTN et PLMN. Sur la figure 1, deux antennes relais du réseau PLMN sont désignées par la référence R3. Par ailleurs, dans l'exemple illustré, un terminal fixe « indépendant » FT1 est associé à PUN2 (ici PSTN), et un terminal mobile MT5 est associé à PUN3 (ici PLMN).

L'installation illustrée comporte également des premier PRN1 et second PRN2 réseaux privés indépendants, auxquels sont respectivement associés des terminaux privés, fixes ou mobiles, et qui sont raccordés aux différents réseaux publics PUN1, PUN2, PUN3, via la plate-forme intelligente INP. Le nombre de réseaux privés n'est pas limité à trois. Il pourra en effet prendre n'importe quelle valeur entière supérieure ou égale à 1. Dans l'exemple illustré, un terminal fixe FT1-1 et deux terminaux mobiles MT1, MT3 sont associés à PRN1, FT1-1 étant le seul physiquement raccordé à PRN1. Par ailleurs, trois terminaux fixes FT1-2, FT2-2, FT3-2 et deux terminaux mobiles MT2, MT4 sont associés à PRN2. FT1-2 est raccordé physiquement à l'un des réseaux publics, par exemple PUN1 (ici Internet), tandis que FT2-2 et FT3-2 sont physiquement raccordés à PRN2.

On entend ici par « terminal », tout matériel informatique pouvant échanger des données avec un autre matériel informatique distant, par voie filaire et/ou par voie d'ondes. Il pourra s'agir notamment de téléphones fixes ou mobiles, ou d'ordinateurs fixes ou portables, éventuellement équipés pour le multimédia, ou encore d'assistants personnels numériques (« PDA »).

Chaque réseau privé PRN1, PRN2 possède au moins une base de données privée PDB1, PDB2 comportant notamment des données représentatives de services qu'ils offrent à leurs utilisateurs, et permettant de mettre en oeuvre lesdits services. Chaque base privée PDB1, PDB2 comporte une table de correspondance dans laquelle sont stockés les identifiants primaires des terminaux privés des utilisateurs du réseau privé en correspondance du ou des services auxquels ils ont accès au sein dudit réseau, éventuellement complétés de niveaux de service. L'identifiant primaire est par exemple un numéro de téléphone, ou une adresse de type internet « e-mail », ou encore un code confidentiel. Par ailleurs, on peut envisager qu'un utilisateur dispose de plusieurs identifiants primaires.

Parmi les services offerts par les réseaux privés, on peut citer par exemple l'affichage du nom de l'appelant, l'affichage du nom de l'appelé, la conférence à trois utilisateurs, voire plus, l'accès à des bases de données professionnelles internes, l'accès à la messagerie interne, le remplissage de formulaires internes, l'accès gratuit à Internet ou à des bases de données externes ou encore les applications permettant d'accèder aux fonctionnalités « d' instant messaging » ou de « chat ».

L'invention propose un dispositif destiné à permettre à des utilisateurs d'un premier réseau privé, raccordés à l'un des réseaux publics, de pouvoir disposer de tout ou partie des services auxquels ils auraient droit s'ils étaient physiquement raccordés audit premier réseau. Bien entendu, une telle possibilité n'est envisageable qu'à partir du moment où les superviseurs des différents réseaux publics et privés ont passé des accords.

Le dispositif comporte tout d'abord, pour chaque réseau privé (au moins) PRN1, PRN2, des moyens de stockage préférentiellement réalisés sous la forme d'une base de données auxiliaire ADB1, ADB2, comportant une « copie » d'une partie au moins de la base de données privée PDB1, PDB2. Plus précisément, chaque base auxiliaire ADB1, ADB2 comporte notamment des données représentatives des services personnalisés dont peuvent bénéficier leurs utilisateurs (représentés par un ou plusieurs identifiants primaires) lorsqu'ils sont physiquement raccordés à un réseau public. Ces données permettent en outre au réseau public, via la plate-forme INP, de mettre en oeuvre les services désignés pour éviter de repasser par le réseau privé, ce qui ferait perdre du temps,notamment lorsqu'ils sont munis de pare-feu (« fire-wall ») ou passerelle de contrôle d'accès (« gateway-proxy »).

De préférence, comme dans la base privée PDB1, PDB2, les données des bases auxiliaires ADB1, ADB2 sont, pour au moins une partie d'entre elles, stockées dans une table de correspondance (identifiant(s) primaire(s) ; service(s) accessible ; niveau(x) de service autorisé).

En raison de leur contenu généralement confidentiel, ces bases de données auxiliaires ADB1, ADB2 sont préférentiellement raccordées à la plate-forme intelligente INP par l'intermédiaire d'un serveur de liaison LS, dédié. De plus, elles sont préférentiellement implantées dans le même local que le serveur LS et la plate-forme INP, pour des raisons de sécurité. Mais, les bases auxiliaires pourraient être distantes de la plate-forme et raccordées à celle-ci par l'intermédiaire d'un réseau privé sécurisé.

Le dispositif comporte en outre d'autres moyens de stockage, implantés de préférence dans un serveur de gestion CS de chaque réseau public PUN, et contenant, de préférence sous la forme d'une table de correspondance, des données représentatives de l'identifiant primaire de chaque terminal privé, de l'identifiant secondaire du réseau privé PRN associé et de l'identifiant tertiaire de la plate-forme intelligente INP ayant accès aux données de la base auxiliaire ADB de ce réseau privé PRN.

Lorsque plusieurs réseaux privés PRN coexistent, cette table peut être subdivisée en sous-tables associées chacune à un réseau privé.

Bien entendu, ces moyens de stockage pourraient être implantés dans le serveur de liaison LS de la plate-forme intelligente INP, ou dans la plate-forme elle-même.

Le dispositif comporte également des moyens de gestion, comportant notamment un module d'extraction EM préférentiellement implanté dans le serveur de gestion CS de chaque réseau public PUN. Ce module d'extraction EM est accessible dans le réseau public PUN à l'adresse qui est choisie par les utilisateurs privés pour adresser leur requête de service (ou de liaison). En d'autres termes, lorsqu'un utilisateur raccordé à un réseau public PUN souhaite bénéficier d'un service offert par son réseau privé PRN, il forme une requête qu'il envoie à l'adresse du module d'extraction EM, de sorte qu'il extraie de la table de correspondance, stockée dans le serveur de gestion CS, les identifiants secondaire et tertiaire associés à l'identifiant primaire du terminal privé ayant émis la requête. Bien entendu, si l'installation ne comporte qu'une unique plate-forme intelligente, il n'est plus nécessaire de lui prévoir un identifiant tertiaire propre. Un tel identifiant tertiaire n'est en effet utile que lorsque plusieurs plate-formes intelligentes coexistent au sein de l'installation.

Les identifiants extraits de la table permettent au module d'extraction EM de transmettre la requête à un module d'analyse AM faisant partie des moyens de gestion et préférentiellement implanté dans la plate-forme intelligente INP, « dans laquelle » se trouve stockée la base auxiliaire ADB associée au réseau privé PRN auquel appartient le terminal privé requérant. Si la requête ne comporte pas l'identifiant secondaire associé au réseau privé PRN, le module d'extraction EM le transmet avec la requête à la plate-forme INP. A réception de ces données (requête et identifiant(s)), le module d'analyse AM, implanté dans la plate-forme intelligente INP, transmet au serveur de liaison LS les données désignant la base auxiliaire ADB et le terminal privé requérant, de sorte qu'il extraie de cette base auxiliaire ADB les informations associées au terminal requérant et les communique au module d'analyse AM. Ce dernier effectue alors une comparaison entre les données contenues dans la requête et les données extraites de la base auxiliaire, de manière à déterminer si l'utilisateur requérant est autorisé ou non à bénéficier du service qu'il demande ou à établir la liaison qu'il demande, éventuellement avec le niveau de service requis.

Si ces données correspondent entre elles, le module d'analyse AM demande au serveur de liaison LS d'extraire de la base auxiliaire ADB les données qui vont permettre de mettre en oeuvre le service requis ou la liaison demandée. Une fois extraites ces données sont communiquées à la plate-forme intelligente INP pour qu'elle satisfasse la requête, sans passer par le réseau privé PRN de l'utilisateur.

Certaines requêtes peuvent comporter des données représentatives d'un code spécifique autorisant l'utilisateur à bénéficier ponctuellement d'un service particulier alors même que la base auxiliaire ne les y autorise pas. Dans ce cas, le module d'analyse AM demande directement au serveur de liaison LS d'extraire de la base auxiliaire correspondante les informations qui vont permettre à la plate-forme INP de mettre en oeuvre le service requis

Des informations liées aux requêtes et communications peuvent être sauvegardées dans les bases auxiliaires ADB afin d'être transmises au réseau privé concerné ou à un organisme tiers pour un traitement spécifique (taxation, journal des appels, statistiques, incidents, etc), soit périodiquement, soit sur requête d'un superviseur de réseau privé.

Par ailleurs, afin de permettre des liens entre terminaux appartenant à des réseaux privés, il est avantageux de prévoir d'autres moyens de stockage comportant une table de liens. Ces moyens de stockage sont préférentiellement implantés dans le serveur de liaison LS de la plate-forme intelligente INP. Cette table de liens définit toutes les liaisons autorisées entre réseaux privés, et les services spécifiques associés. Les relations bi-directionnelles sont autorisées par construction, mais elles sont mono-directionnelles dans leur cheminement afin d'éviter que des liaisons interdites ne puissent être réalisées.

D'autre part, le dispositif peut comprendre encore d'autres moyens de stockage de manière à mémoriser une ou plusieurs autres tables de relations externes privilégiées définissant pour certains terminaux privés une correspondance entre leur identifiant primaire et une liste d'identifiants quaternaires représentatifs de terminaux avec lesquels ils sont autorisés à établir des liaisons. Ce type de table est particulièrement intéressant lorsqu'il s'agit de communiquer avec des clients pour lesquels aucun accord inter-réseau n'a été passé. Préférentiellement, ces moyens de stockage sont implantés dans le serveur de liaison LS de la plate-forme intelligente INP ou bien directement dans la base auxiliaire concernée ADB1, ADB2. La première solution est avantageuse lorsqu'il n'existe qu'une seule table partagée par les différents réseaux privés PRN1, PRN2. La seconde solution est préférable lorsque chaque réseau privé PRN1, PRN2 possède sa propre table de relations externes.

Les données contenues dans les bases auxiliaires et dans les tables de liens et de correspondance sont préférentiellement mises à jour par un module de mise à jour dédié (non représenté), du dispositif, implanté dans la plate-forme intelligente INP ou dans son serveur de liaison SL. Selon les contraintes (fréquence des modifications, qualité du service, niveau de sécurité, etc), ce module peut fonctionner soit périodiquement, soit sur requête à la demande d'un superviseur de réseau privé. La mise à jour s'effectue soit par téléchargement de données communiquées par le réseau privé PRN, via un réseau public PUN, soit manuellement à l'aide de données copiées sur un support de stockage, tel qu'un CD-ROM ou un disque dur amovible.

Cette mise à jour peut, pour des raisons de sécurité, comprendre une routine de déclaration de l'identifiant de celui qui la demande (identification du réseau privé, identification-authentification du demandeur (avec un échange éventuel de messages), identification de l'opération et de son contenu (service et niveau de service)).

Dans le cas de(s) table(s) définissant des liens entre des terminaux privés d'utilisateurs et des listes de terminaux, on peut envisager une procédure spécifique de mise à jour initiée par chaque utilisateur lorsqu'il désire modifier sa propre liste.

De plus, le dispositif peut être sécurisé. A cet effet, la plate-forme intelligente INP est de préférence à accès sécurisé et l'architecture de sécurité est issue de l'opérateur du réseau public ou du réseau privé. Préférentiellement, cette sécurisation peut porter sur des procédures d'identification, d'authentification et/ou de chiffrement, notamment lors des transferts de données. On pourra par exemple utiliser une architecture de type PKI (Public Key Infrastructure), dont la fonction de tiers de confiance délivrant les certificats est assurée par l'entreprise propriétaire du réseau privé ou par un service de l'opérateur du réseau public.

Les modules d'extraction, d'analyse et de mise à jour peuvent être respectivement réalisés sous la forme de circuits électroniques, de modules logiciels (ou informatiques), ou d'une combinaison de circuits et de logiciels. Par ailleurs, les modules d'analyse et de mise à jour pourraient être regroupés en un même module. De tels modules, lorsqu'il sont réalisés sous la forme de logiciels, peuvent être facilement implantés, soit in situ, par exemple à l'aide d'un support de mémorisation de type CD-ROM, soit à distance par téléchargement (éventuellement sécurisé).

L'invention offre également un procédé destiné aux réseaux privés comportant une base de données privée contenant les identifiants primaires de leurs terminaux privés associés à des premières données représentatives des services auxquels ils ont accès au sein du réseau privé, et les réseaux publics qui comportent une plate-forme « intelligente », de commutation et routage, et sont raccordés auxdits réseaux privés.

Ce procédé peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituants le dispositif, seules seront résumées ci-après les étapes mettant en oeuvre les fonctions principales du procédé selon l'invention.

Ce procédé comporte i) une première étape dans laquelle on stocke, à une adresse accessible à la plate-forme intelligente INP, de secondes données (base auxiliaire ADB1, ADB2) représentatives d'une partie au moins de la base de données privée PRN1, PRN2, et, à une adresse du réseau public PUN, des troisièmes données (table de correspondance) représentatives de l'identifiant primaire de chaque terminal privé FT, MT, du réseau privé associé PRN1, PRN2 et de la plate-forme intelligente INP ayant accès aux secondes données dudit réseau privé, et ii) une seconde étape dans laquelle, en cas d'émission par l'un des terminaux privés FT, MT d'une requête de service sur le réseau public PUN, on extrait des troisièmes données (table de correspondance) associées à l'identifiant primaire du terminal privé requérant, puis on compare les données de la requête aux secondes données (base auxiliaire ADB1,ADB2) désignées par les troisièmes données extraites, de manière à autoriser ou non la plate-forme INP, désignée par les troisièmes données extraites (table de correspondance), à mettre en oeuvre le service requis.

On va maintenant décrire quelques exemples de traitement de requête, en assimilant un utilisateur à son terminal et le serveur de liaison LS, le module d'analyse AM et la plate-forme intelligente INP à la seule plate-forme INP.

Dans les exemples qui suivent, on définit trois niveaux de service. Le niveau S1 est attribué aux terminaux privés distants qui sont autorisés à bénéficier du service de « présentation de nom » pour une communication strictement interne, c'est-à-dire réservée aux échanges au sein de leur réseau privé. Le niveau S2 est attribué aux terminaux privés distants qui sont autorisés à bénéficier du service de « présentation de nom » lors de communications avec des terminaux appartenant à un réseau privé différent du leur, mais avec lequel a été passé un accord de liaison et d'utilisation de certaines données de leurs bases internes respectives. Le niveau S3 est attribué aux terminaux privés distants qui sont autorisés à bénéficier du service de « présentation de nom » lors de communications avec des terminaux quelconques privilégiés, répertoriés dans la table de relations externes privilégiées stockée dans la base auxiliaire ADB1, ADB2 associée au réseau privé PRN1, PRN2 de l'utilisateur ou bien dans le serveur de liaison LS.

Dans un premier exemple, le terminal mobile privé MT1 associé au réseau privé PRN1, mais distant de celui-ci, souhaite établir une liaison avec le terminal mobile MT3 également associé au réseau privé PRN1 et distant de celui-ci. MT1 est autorisé à bénéficier des trois niveaux de service S1, S2 et S3. Ces informations de service sont donc stockées dans la base auxiliaire ADB1 en correspondance de l'identifiant primaire de MT1.

MT1 génère sur le réseau public PUN3 (ici PLMN) une requête destinée à établir une liaison avec MT3. Cette requête est transmise à l'adresse du module d'extraction EM, ici implanté dans le serveur de gestion CS du réseau public PLMN. Le module d'extraction EM consulte alors la table de correspondance stockée dans le serveur CS pour en extraire les données associées à l'identifiant primaire de MT1, et notamment l'identifiant secondaire de PRN1 et l'identifiant tertiaire de la plate-forme INP associée à la base auxiliaire ADB1 de PRN1. Le module EM transmet ensuite la requête et les identifiants extraits à la plate-forme INP, via le réseau public PLMN. La plate-forme consulte alors la base auxiliaire ADB1 pour en extraire les données associées à MT1.

INP compare les données extraites d'ADB1 à celles reçues. La requête ayant pour objet d'établir une liaison avec le terminal mobile MT3 appartenant au réseau privé PRN1, MT1 doit disposer de l'autorisation S1. Tel est le cas ici. INP détermine alors dans la base auxiliaire ADB1 si MT3 fait bien partie du réseau privé PRN1. Tel est le cas ici.

INP en déduit alors que la requête peut être satisfaite. Il extrait alors de la base auxiliaire ADB1 les informations stockées qui vont lui permettre de mettre en oeuvre le niveau de service S1 demandé par MT1. INP transmet alors à MT3, sur le réseau public PLMN, les informations nécessaires à l'établissement de la liaison avec MT3 en incluant le nom de l'utilisateur de MT1 (service requis).

Dans un deuxième exemple, le terminal mobile privé MT1 associé au réseau privé PRN1, mais distant de celui-ci, souhaite établir une liaison avec le terminal mobile MT2 associé au réseau privé PRN2 et distant de celui-ci. MT1 est autorisé à bénéficier des trois niveaux de service S1, S2 et S3. Ces informations de service sont donc stockées dans la base auxiliaire ADB1 en correspondance de l'identifiant primaire de MT1. Par ailleurs, les données représentatives de la liaison autorisée entre les deux réseaux privés PRN1 et PRN2 sont stockées dans la table de liens implantée dans la plate-forme INP.

MT1 génère sur le réseau public PUN3 (ici PLMN) une requête destinée à établir une liaison avec MT2. Cette requête est transmise à l'adresse du module d'extraction EM, ici implanté dans le serveur de gestion CS du réseau public PLMN. Le module d'extraction EM consulte alors la table de correspondance stockée dans le serveur CS pour en extraire les données associées à l'identifiant primaire de MT1, et notamment l'identifiant secondaire de PRN1 et l'identifiant tertiaire de la plate-forme INP associée à la base auxiliaire ADB1 de PRN1. Le module EM transmet ensuite la requête et les identifiants extraits à la plate-forme INP, via le réseau public PLMN. La plate-forme consulte alors la base auxiliaire ADB1 pour en extraire les données associées à MT1.

INP compare les données extraites d'ADB1 à celles reçues. La requête ayant pour objet d'établir une liaison avec le terminal mobile MT2 appartenant au réseau privé PRN2, MT1 doit disposer de l'autorisation S2. Tel est le cas ici. INP détermine alors dans la table de liens si la liaison entre PRN1 et PRN2 est autorisée. Tel est le cas ici. Puis, INP détermine dans la base auxiliaire ADB2 si MT2 fait bien partie du réseau privé PRN2. Tel est le cas ici.

INP en déduit alors que la requête peut être satisfaite. Il extrait alors de la base auxiliaire ADB1 les informations stockées qui vont lui permettre de mettre en oeuvre le niveau de service S2 demandé par MT1. INP transmet alors à MT2, sur le réseau public PLMN, les informations nécessaires à l'établissement de la liaison avec MT2 en incluant le nom de l'utilisateur de MT1 (service requis).

Dans un troisième exemple, le terminal mobile privé MT1 associé au réseau privé PRN1, mais distant de celui-ci, souhaite établir une liaison avec le terminal mobile MT5 de l'un de ses clients privilégiés, lequel est raccordé par voie d'ondes au réseau public PUN3 (ici PLMN). MT1 est autorisé à bénéficier des trois niveaux de service S1, S2 et S3. Ces informations de service sont donc stockées dans la base auxiliaire ADB1 en correspondance de l'identifiant primaire de MT1. Par ailleurs, les données représentatives de la liaison autorisée entre MT1 et MT5 sont stockées dans la table de relations externes privilégiées implantée dans la plate-forme INP.

MT1 génère sur le réseau public PUN3 (ici PLMN) une requête destinée à établir une liaison avec MT5. Cette requête est transmise à l'adresse du module d'extraction EM, ici implanté dans le serveur de gestion CS du réseau public PLMN. Le module d'extraction EM consulte alors la table de correspondance stockée dans le serveur CS pour en extraire les données associées à l'identifiant primaire de MT1, et notamment l'identifiant secondaire de PRN1 et l'identifiant tertiaire de la plate-forme INP associée à la base auxiliaire ADB1 de PRN1. Le module EM transmet ensuite la requête et les identifiants extraits à la plate-forme INP, via le réseau public PLMN. La plate-forme consulte alors la base auxiliaire ADB1 pour en extraire les données associées à MT1.

INP compare les données extraites d'ADB1 à celles reçues. La requête ayant pour objet d'établir une liaison avec le terminal mobile MT5 qui n'appartient pas à un réseau privé avec lequel son réseau privé PRN1 a passé un accord, MT1 doit disposer de l'autorisation S3. Tel est le cas ici. INP détermine alors dans la table de relations externes privilégiées si la liaison entre MT1 et MT5 est autorisée. Tel est le cas ici.

INP en déduit alors que la requête peut être satisfaite. Il extrait alors de la base auxiliaire ADB1 les informations stockées qui vont lui permettre de mettre en oeuvre le niveau de service S3 demandé par MT1. INP transmet alors à MT5, sur le réseau public PLMN, les informations nécessaires à l'établissement de la liaison avec MT5 en incluant le nom de l'utilisateur de MT1 (service requis).

De nombreuses autres situations peuvent être envisagées, notamment avec des terminaux fixes raccordés à des réseaux privés ou publics.

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

Avantageusement, l'invention peut permettre de gérer des notions de priorité entre les services offerts sur les réseaux publics grâce aux données et aux plateformes INP. Ainsi un appel de type « sécurité » pourrait utiliser en priorité les ressources des réseaux publics de par la reconnaissance de son appartenance à une catégorie d'abonnés priviligiée.

## Revendications

1. Procédé de fourniture de services à des terminaux privés (FT ;MT) appartenant à au moins un réseau privé (PRN1,2), comportant une base de données privée (PDB1,2) contenant des identifiants primaires des terminaux privés (FT,MT) associés à des premières données représentatives de services auxquels ont accès lesdits terminaux privés au sein du réseau privé, et susceptibles d'être connectés à un réseau public (PUN1-3) comportant une plate-forme intelligente (INP) et raccordé audit réseau privé, **caractérisé en ce qu'**il comprend :
* une première étape dans laquelle on stocke i) à une adresse accessible à la plate-forme intelligente (INP), de secondes données représentatives d'une partie au moins de la base de données privée (PDB1,PDB2), et ii) à une adresse du réseau public (PUN), des troisièmes données représentatives de l'identifiant primaire de chaque terminal privé (FT,MT), du réseau privé associé (PRN1,PRN2) et de la plate-forme intelligente (INP) ayant accès aux secondes données dudit réseau privé, et
* une seconde étape dans laquelle, en cas d'émission par l'un desdits terminaux privés (FT,MT) d'une requête de service sur le réseau public, on extrait les troisièmes données associées à l'identifiant primaire du terminal privé requérant, puis on compare les données de la requête aux secondes données désignées par les troisièmes données extraites, de manière à autoriser ou non la plate-forme (INP), désignée par lesdites troisièmes données extraites, à mettre en oeuvre ledit service requis.

2. Procédé selon la revendication 1, **caractérisé en ce que** les secondes données sont stockées dans au moins une base de données auxiliaire (ADB1,ADB2).

3. Procédé selon selon la revendication 1, **caractérisé en ce que** les troisièmes données sont stockées dans une première table de correspondance sous forme d'un identifiant primaire de terminal privé (FT,MT), d'un identifiant secondaire associé au réseau privé (PRN1,PRN2) auquel appartient ledit terminal privé et d'un identifiant tertiaire associé à la plate-forme intelligente (INP) ayant accès aux secondes données dudit réseau privé.

4. Procédé selon la revendication 1, **caractérisé en ce que** dans la première étape on stocke à une adresse accessible à la plate-forme intelligente (INP) une seconde table de liens entre des réseaux privés (PRN1,PRN2) autorisés à communiquer entre eux.

5. Procédé selon la revendication 1, **caractérisé en ce que** lesdites requêtes comprennent au moins l'identifiant primaire du terminal privé requérant et des quatrièmes données représentatives d'une action requise, choisie dans un groupe comprenant au moins une demande de service et une demande de liaison à un autre terminal privé.

6. Procédé selon la revendication 5, **caractérisé en ce que** certaines desdites requêtes comprennent en outre des cinquièmes données représentatives d'une autorisation d'accès à au moins un service au sein de leur réseau.

7. Procédé selon la revendication 1, **caractérisé en ce que** certaines desdites secondes données sont représentatives de services subdivisés en niveaux de service.

8. Procédé selon la revendication 1, **caractérisé en ce qu'**il comprend une étape auxiliaire dans laquelle on stocke à une adresse accessible à la plate-forme intelligente (INP), une troisième table de relations externes comportant pour certains au moins des terminaux privés (FT,MT) leur identifiant primaire et une liste d'identifiants quaternaires représentatifs de terminaux avec lesquels ils sont autorisés à établir des liaisons.

9. Procédé selon la revendication 2, **caractérisé en ce qu'**il comprend une étape auxiliaire dans laquelle on met à jour le contenu de la base auxiliaire (ADB1,ADB2) et/ou de la première table de correspondance et/ou de la seconde table de liens et/ou de la troisième table de relations externes.

10. Dispositif de fourniture de services à des terminaux privés (FT,MT) appartenant à au moins un réseau privé (PRN1,2), comportant une base de données privée (PDB1,2) contenant des identifiants primaires des terminaux privés associés à des premières données représentatives de services auxquels ont accès lesdits terminaux privés (FT,MT) au sein du réseau privé, et susceptibles d'être connectés à un réseau public (PUN1-3) comportant une plate-forme intelligente (INP) et raccordé audit réseau privé, **caractérisé en ce qu'**il comprend :
i. des premiers moyens de stockage, accessibles à la plate-forme intelligente (INP) et contenant des secondes données représentatives d'une partie au moins de la base de données privée (PDB1,PDB2),
ii. des seconds moyens de stockage, accessibles sur le réseau public et contenant des troisièmes données représentatives de l'identifiant primaire de chaque terminal privé (FT,MT), du réseau privé associé (PRN1,PRN2) et de la plate-forme intelligente (INP) ayant accès aux secondes données dudit réseau privé, et
iii. des moyens de gestion (AM,EM) propres, en cas d'émission par l'un desdits terminaux privés (FT,MT) d'une requête de service sur le réseau public, à extraire des seconds moyens de stockage les troisièmes données associées à l'identifiant primaire du terminal privé requérant, puis à comparer les données de la requête aux secondes données désignées par les troisièmes données extraites, de manière à autoriser ou non la plate-forme (INP), désignée par lesdites troisièmes données extraites, à mettre en oeuvre ledit service requis.

11. Dispositif selon la revendication 10, **caractérisé en ce qu'**il comprend au moins une base de données auxiliaire (ADB1,ADB2) dans laquelle sont stockées lesdites secondes données associées à au moins un réseau privé.

12. Dispositif selon la revendication 10, **caractérisé en ce que** lesdits seconds moyens de stockage comprennent une première table de correspondance dans laquelle sont stockées les troisièmes données sous forme d'un identifiant primaire de terminal privé (FT,MT), d'un identifiant secondaire associé au réseau privé (PRN1,PRN2) auquel appartient ledit terminal privé et d'un identifiant tertiaire associé à la plate-forme intelligente (INP) ayant accès aux secondes données dudit réseau privé.

13. Dispositif selon la revendication 10, **caractérisé en ce qu'**il comprend des troisièmes moyens de stockage, accessibles à la plate-forme intelligente (INP) et comportant une seconde table de liens entre des réseaux privés (PRN1,PRN2) autorisés à communiquer entre eux.

14. Dispositif selon la revendication 10, **caractérisé en ce que** certaines requêtes comprennent au moins l'identifiant primaire du terminal privé requérant et des quatrièmes données représentatives d'une action requise choisie dans un groupe comprenant au moins une demande de service et une demande de liaison à un autre terminal privé.

15. Dispositif selon la revendication 14, **caractérisé en ce que** certaines requêtes comprennent en outre des cinquièmes données représentatives d'une autorisation d'accès à au moins un service au sein d'un réseau.

16. Dispositif selon la revendication 10, **caractérisé en ce que** certaines desdites secondes données sont représentatives de services subdivisés en niveaux de service.

17. Dispositif selon la revendication 10, **caractérisé en ce qu'**il comprend des quatrièmes moyens de stockage, accessibles à la plate-forme intelligente (INP) et comportant une troisième table de relations externes comprenant, pour certains au moins des terminaux privés (FT,MT), leur identifiant primaire et une liste d'identifiants quaternaires représentatifs de terminaux avec lesquels ils sont autorisés à établir des liaisons.

18. Dispositif selon la revendication 11, **caractérisé en ce qu'**il comprend des moyens de mise à jour propres à mettre à jour le contenu de la base auxiliaire (ADB1,ADB2) et/ou de la première table de correspondance et/ou de la seconde table de liens et/ou de la troisième table de relations externes.

19. Dispositif selon la revendication 18, **caractérisé en ce que** lesdits moyens de mise à jour sont implantés dans un serveur de liaison (LS) de ladite plate-forme intelligente (INP).

20. Dispositif selon la revendication 10, **caractérisé en ce qu'**une partie (EM) au moins desdits moyens de gestion (AM,EM) est implantée dans un serveur de gestion (CS) dudit réseau public (PUN).

21. Dispositif selon la revendication 20, **caractérisé en ce que** lesdits seconds moyens de stockage sont implantés dans ledit serveur de gestion (CS).

22. Dispositif selon la revendication 10, **caractérisé en ce que** ladite plate-forme intelligente (INP) est à accès sécurisé.

23. Utilisation des procédé et dispositif selon l'une des revendications précédentes, dans les réseaux publics (PUN) choisis dans un groupe comprenant Internet, PLMN et PSTN.

## Patentansprüche

1. Verfahren zur Bereitstellung von Diensten für private Endgeräte (FT; MT), die zu mindestens einem privaten Netz (PRN1, 2) gehören, das eine private Datenbank (PDB1, 2) umfasst, die die primären Kennungen der privaten Endgeräte (FT, MT) beinhaltet, die den ersten Daten zugeordnet sind, die repräsentativ sind für die Dienste, auf die die genannten privaten Endgeräte innerhalb des privaten Netzes Zugriff haben, und die mit einem öffentlichen Netz (PUN 1-3) verbunden werden können, das eine intelligente Plattform (INP) beinhaltet und mit dem genannten privaten Netz verbunden ist, **dadurch gekennzeichnet, dass** es Folgendes umfasst:
* einen ersten Schritt, in dem i) unter einer der intelligenten Plattform (INP)zugänglichen Adresse zweite Daten gespeichert werden, die für mindestens einen Teil der privaten Datenbank (PDB1, PDB2) repräsentativ sind, und in dem ii) unter einer Adresse im öffentlichen Netz (PUN) dritte Daten gespeichert werden, die für die primäre Kennung jedes privaten Endgeräts (FT, MT) des entsprechenden privaten Netzes (PRN1, PRN2) und für die intelligente Plattform (INP) repräsentativ sind, die Zugriff auf die zweiten Daten des genannten privaten Netzes hat, und
* einen zweiten Schritt, bei dem im Fall der Erstellung einer Dienstanfrage im öffentlichen Netz durch eines der genannten privaten Endgeräte (FT, MT) die dritten Daten, die der primären Kennung des anfragenden privaten Endgeräts zugeordnet sind, ausgelesen werden, anschließend werden die Daten der Anfrage mit den zweiten Daten verglichen, die durch die dritten ausgelesenen Daten gekennzeichnet sind, um die intelligente Plattform (INP), die durch die dritten ausgelesenen Daten gekennzeichnet ist, zu autorisieren, den genannten, angeforderten Dienst auszuführen.

2. Verfahren gemäß Anspruch 1, **dadurch gekennzeichnet, dass** die zweiten Daten in mindestens einer Hilfsdatenbank (ADB1, ADB2) gespeichert sind.

3. Verfahren gemäß Anspruch 1, **dadurch gekennzeichnet, dass** die dritten Daten in einer Zuordnungstabelle in Form einer primären Kennung des privaten Endgeräts (FT, MT), einer sekundären, dem privaten Netz (PRN1, PRN2), zu dem das genannte private Endgerät gehört, zugeordneten sekundären Kennung und einer der intelligenten Plattform (INP) zugeordneten dritten Kennung gespeichert sind, die Zugriff auf die zweiten Daten des genannten privaten Netzes hat.

4. Verfahren gemäß Anspruch 1, **dadurch gekennzeichnet, dass** in dem ersten Schritt unter einer der intelligenten Plattform (INP) zugänglichen Adresse eine zweite Tabelle mit den Verbindungen zwischen privaten Netzen (PRN1, PRN2), die miteinander kommunizieren dürfen, gespeichert wird.

5. Verfahren gemäß Anspruch 1, **dadurch gekennzeichnet, dass** die genannten Anfragen mindestens die primäre Kennung des privaten Endgeräts und vierte Daten beinhalten, die für einen angeforderten Vorgang repräsentativ sind, der aus einer Gruppe ausgewählt wird, die mindestens eine Dienstanfrage und eine Anfrage für eine Verbindung mit einem anderen privaten Endgerät umfasst.

6. Verfahren gemäß Anspruch 5, **dadurch gekennzeichnet, dass** einige der genannten Anfragen außerdem fünfte Daten umfassen, die für eine Zugriffsgenehmigung für mindestens einen Dienst innerhalb ihres Netzes repräsentativ sind.

7. Verfahren gemäß Anspruch 1, **dadurch gekennzeichnet, dass** einige der genannten zweiten Daten für Dienste repräsentativ sind, die in verschiedene Dienstebenen aufgeteilt sind.

8. Verfahren gemäß Anspruch 1, **dadurch gekennzeichnet, dass** es einen zusätzlichen Schritt beinhaltet, in dem unter einer für die intelligente Plattform (INP) zugänglichen Adresse eine dritte Tabelle mit externen Beziehungen gespeichert wird, die zumindest für bestimmte private Endgeräte (FT, MT) ihre primäre Kennung und eine Liste der quartären Kennungen beinhaltet, die für die Endgeräte, zu denen sie Verbindungen herstellen dürfen, repräsentativ sind.

9. Verfahren gemäß Anspruch 2, **dadurch gekennzeichnet, dass** es einen zusätzlichen Schritt beinhaltet, in dem der Inhalt der Hilfsdatenbank (ADB1, ADB2) und/oder der ersten Zuordnungstabelle und/oder der zweiten Verbindungstabelle und/oder der dritten externen Beziehungstabelle aktualisiert wird.

10. Vorrichtung zur Bereitstellung von Diensten für private Endgeräte (FT, MT), die zu mindestens einem privaten Netz (PRN1, 2) gehören und eine private Datenbank (PDB1, 2) umfassen, die die primären Kennungen der privaten Endgeräte beinhaltet, die ersten Daten zugeordnet werden, die repräsentativ für die Dienste sind, auf die die genannten privaten Endgeräte (FT, MT) innerhalb des privaten Netzes Zugriff haben, und die an ein öffentliches Netz (PUN 1-3) angeschlossen werden können, das eine intelligente Plattform (INP) beinhaltet und an das genannte private Netz angeschlossen ist, **dadurch gekennzeichnet, dass** es Folgendes umfasst:
i. erste Speichermedien, die der intelligenten Plattform (INP) zugänglich sind und die zweite Daten beinhalten, die für mindestens einen Teil der privaten Datenbank (PDB1, PDB2) repräsentativ sind,
ii. zweite Speichermedien, die dem öffentlichen Netz zugänglich sind und die dritte Daten beinhalten, die für die primäre Kennung jedes privaten Endgeräts (FT, MT), für das zugeordnete private Netz (PRN1, PRN2) und für die intelligente Plattform (INP) repräsentativ sind, die auf zweite Daten des genannten privaten Netzwerks Zugriff hat, und
iii. eigene Verwaltungsmittel (AM, EM), die bei der Erstellung einer Dienstanfrage im öffentlichen Netz durch eines der genannten privaten Endgeräte (FT, MT) aus den zweiten Speichermedien die dritten Daten auslesen, die der primären Kennung des anfragenden privaten Endgeräts zugeordnet sind, die Daten der Anfrage anschließend mit den zweiten Daten vergleichen, die durch die dritten ausgelesenen Daten gekennzeichnet sind, um die intelligente Plattform (INP) zu autorisieren, die durch die genannten dritten ausgelesenen Daten gekennzeichnet ist, den genannten, angefragten Dienst auszuführen.

11. Vorrichtung gemäß Anspruch 10, **dadurch gekennzeichnet, dass** sie mindestens eine Hilfsdatenbank (ADB1, ADB2) beinhaltet, in der die genannten zweiten Daten gespeichert sind, die mindestens einem privaten Netz zugeordnet sind.

12. Vorrichtung gemäß Anspruch 10, **dadurch gekennzeichnet, dass** die genannten zweiten Speichermedien eine erste Zuordnungstabelle beinhalten, in der die dritten Daten in Form einer primären Kennung des privaten Endgeräts (FT, MT), einer dem privaten Netz (PRN1, PRN2), zu dem das private Endgerät gehört, zugeordneten sekundären Kennung, und einer der intelligenten Plattform (INP) zugeordneten tertiären Kennung gespeichert sind, die Zugriff auf die zweiten Daten des genannten privaten Netzes hat.

13. Vorrichtung gemäß Anspruch 10, **dadurch gekennzeichnet, dass** sie dritte Speichermedien beinhaltet, die der intelligenten Plattform (INP) zugänglich sind und eine zweite Verbindungstabelle zwischen privaten Netzen (PRN1, PRN2) beinhalten, die berechtigt sind, miteinander zu kommunizieren.

14. Vorrichtung gemäß Anspruch 10, **dadurch gekennzeichnet, dass** einige Anfragen mindestens eine primäre Kennung des anfragenden privaten Endgeräts sowie vierte Daten beinhalten, die für einen angeforderten Vorgang repräsentativ sind, der aus einer Gruppe ausgewählt wird, die mindestens eine Dienstanfrage und eine Anfrage für eine Verbindung mit einem anderen privaten Endgerät umfasst.

15. Vorrichtung gemäß Anspruch 14, **dadurch gekennzeichnet, dass** einige Anfragen außerdem fünfte Daten beinhalten, die für eine Zugriffsberechtigung auf mindestens einen Dienst innerhalb des Netzes repräsentativ sind.

16. Vorrichtung gemäß Anspruch 10, **dadurch gekennzeichnet, dass** einige der genannten zweiten Daten für Dienste repräsentativ sind, die in verschiedene Dienstebenen unterteilt sind.

17. Vorrichtung gemäß Anspruch 10, **dadurch gekennzeichnet, dass** sie vier Speichermedien beinhaltet, die der intelligenten Plattform (INP) zugänglich sind und eine dritte Tabelle mit externen Verbindungen beinhalten, die zumindest für einige private Endgeräte (FT, MT) ihre primäre Kennung und eine Liste der quartären Kennungen umfasst, die für die Endgeräte, mit denen sie Verbindungen herstellen dürfen, repräsentativ sind.

18. Vorrichtung gemäß Anspruch 11, **dadurch gekennzeichnet, dass** sie eigene Vorrichtungen zur Aktualisierung des Inhalts der Hilfsdatenbank (ADB1, ADB2) und/oder der ersten Zuordnungstabelle und/oder der zweiten Verbindungstabelle und/oder der dritten Tabelle mit externen Beziehungen beinhaltet.

19. Vorrichtung gemäß Anspruch 18, **dadurch gekennzeichnet, dass** die genannten Vorrichtungen zur Aktualisierung in einem Verbindungsserver (LS) der genannten intelligenten Plattform (INP) angeordnet sind.

20. Vorrichtung gemäß Anspruch 10, **dadurch gekennzeichnet, dass** zumindest ein Teil (EM) der genannten Verwaltungsmittel (AM, EM) in einem Verwaltungsserver (CS) des genannten öffentlichen Netzes (PUN) angeordnet ist.

21. Vorrichtung gemäß Anspruch 20, **dadurch gekennzeichnet, dass** die genannten zweiten Speichermedien in dem genannten Verwaltungsserver (CS) angeordnet sind.

22. Vorrichtung gemäß Anspruch 10, **dadurch gekennzeichnet, dass** die genannte intelligente Plattform (INP) mit einem gesicherten Zugriff ausgestattet ist.

23. Einsatz des Verfahrens und der Vorrichtung gemäß einem der vorgenannten Ansprüche in den öffentlichen Netzen (PUN) einer bestimmten Gruppe, die Internet, PLMN und PSTN umfasst.

## Claims

1. A method of providing services to private terminals (FT,MT) belonging to at least one private network (PRN1,2) including a private database (PDB1,2) containing primary identifiers of the private terminals (FT,MT) associated with first data representative of services to which said private terminals have access within the private network and adapted to be connected to a public network (PUN1-3) including an intelligent platform (INP) and connected to said private network, **characterised in that** it includes:
- a first step in which there is stored, (i) at an address accessible to the intelligent platform (INP), second data representative of at least a portion of said private database (PDB1,PDB2) and, (ii) at an address of the public network (PUN), third data representative of the primary identifier of each private terminal (FT,MT), of the associated private network (PRN1,PRN2), and of the intelligent platform (INP) having access to the second data of said private network, and
- a second step in which, if a private terminal (FT,MT) sends a service request over the public network, said third data associated with the primary identifier of the requesting private terminal is extracted, after which the data of the request is compared to the second data designated by the extracted third data to authorise or not the platform (INP) designated by said extracted third data to implement said required service.

2. A method according to claim 1 **characterised in that** the second data is stored in at least one auxiliary database (ADB1, ADB2).

3. A method according to claim 1 **characterised in that** the third data is stored in a correspondence table in the form of a private terminal (FT,MT) primary identifier, a secondary identifier associated with the private network (PRN1,PRN2) to which said private terminal belongs, and a tertiary identifier associated with the intelligent platform (INP) having access to the second data of said private network.

4. A method according to claim 1 **characterised in that**, in the first step, there is stored, at an address accessible to the intelligent platform (INP), a table of links between private networks (PRN1,PRN2) authorised to communicate with each other.

5. A method according to claim 1 **characterised in that** said requests include at least one primary identifier of the requesting private terminal and fourth data representative of a required action chosen from a group comprising at least one service request and a request for a link to another private terminal.

6. A method according to claim 5 **characterised in that** some requests further comprise fifth data representative of an authorisation to access at least one service within their network.

7. A method according to claim 1 **characterised in that** some of said second data is representative of services subdivided into service levels.

8. A method according to claim 1 further including an auxiliary step in which there is stored, at an address accessible to the intelligent platform (INP), a table of external relations including for at least some of the private terminals (FT,MT) their primary identifier and a list of quaternary identifiers representative of terminals with which they are authorised to set up links.

9. A method according to claim 2 further including an auxiliary step of updating the content of the auxiliary base (ADB1, ADB2) and/or the correspondence table and/or the links table and/or the external relations table.

10. A device for providing services to private terminals (FT,MT) of at least one private network (PRN1,2) including a private database (PDB1,2) containing primary identifiers of the private terminals (FT,MT) associated with first data representative of services to which said private terminals (FT,MT) have access within the private network and adapted to be connected to a public network (PUN1-3) including an intelligent platform (INP) and connected to said private network (PRN), **characterised in that** it includes:
i. first storage means accessible to the intelligent platform (INP) and containing second data representative of at least a portion of the private database (PDB1,PDB2),
ii. second storage means accessible on the public network and containing third data representative of the primary identifier of each private terminal (FT,MT), of the associated private network (PRN1,PRN2) and of the intelligent platform (INP) having access to the second data of said private network, and
iii. management means (AM,EM) adapted, if a private terminal (FT,MT) sends a service request over said public network, to extract from the second storage means the third data associated with the primary identifier of the requesting private terminal, and then to compare the data of the request to the second data designated by the extracted third data, to authorise or not the platform designated (INP) by said extracted third data to implement said requested service.

11. A device according to claim 10 **characterised in that** it includes at least one auxiliary database (ADB1,ADB2) in which said second data associated with a private network is stored.

12. A device according to claim 10 **characterised in that** said second storage means include a correspondence table which stores the third data in the form of a private terminal (FT,MT) primary identifier, a secondary identifier associated with the private network (PRN1,PRN2) to which said private terminal belongs, and a tertiary identifier associated with the intelligent platform (INP) having access to the second data of said private network.

13. A device according to claim 10 **characterised in that** it includes third storage means accessible to the intelligent platform (INP) and containing a table of links between private networks (PRN1,PRN2) authorised to communicate with each other.

14. A device according to claim 10 **characterised in that** some requests include at least the primary identifier of the requesting private terminal and fourth data representative of a required action chosen from a group comprising at least one service request and a request to link to another private terminal.

15. A device according to claim 14 **characterised in that** some requests further include fifth data representative of authorisation to access at least one service within a network.

16. A device according to claim 10 **characterised in that** some of said second data is representative of services subdivided into service levels.

17. A device according to claim 10 **characterised in that** it includes fourth storage means accessible to said intelligent platform (INP) and including a table of external relations including, for at least some of the private terminals (FT,MT), their primary identifier and a list of quaternary identifiers representative of terminals with which they are authorised to set up links.

18. A device according to claim 11 **characterised in that** it includes updating means adapted to update the content of the auxiliary base (ADB1, ADB2) and/or the correspondence table and/or the links table and/or the external relations table.

19. A device according to claim 18 **characterised in that** said updating means are installed on a link server (LS) of said intelligent platform (INP).

20. A device according to claim 10 **characterised in that** at least some (EM) of said management means (AM, EM) is installed in a control server (CS) of said public network (PUN).

21. A device according to claim 20 **characterised in that** said second storage means are installed on said control server (CS).

22. A device according to claim 10 **characterised in that** said intelligent platform (INP) offers secure access.

23. Use of a method and a device according to one of the preceding claims in public networks (PUN) chosen from a group comprising the Internet, public land mobile networks and public switched telephone networks.
